# EUROPÄISCHE PATENTSCHRIFT

(11) **EP 2 532 044 B1**
(45) Veröffentlichungstag und Bekanntmachung des Hinweises auf die Patenterteilung: **04.04.2018**
(21) Anmeldenummer: 11700229.5
(22) Anmeldetag: 03.01.2011
(51) Int. Cl.: H01M 10/625, H01M 10/615, H01M 10/647, H01M 10/6556, H01M 10/6567, H01M 10/6555, H01M 10/6554, H01M 10/6571, H01M 10/0525

(54) **BATTERIESYSTEM UND VERFAHREN ZUR ERWÄRMUNG DES BATTERIESYSTEMS**
BATTERY SYSTEM AND METHOD FOR HEATING THE BATTERY SYSTEM
SYSTÈME DE BATTERIE ET PROCÉDÉ DE CHAUFFAGE DU SYSTÈME DE BATTERIE

(30) Priorität: 01.02.2010 DE 102010001430
(43) Veröffentlichungstag der Anmeldung: 12.12.2012
(73) Patentinhaber: Samsung SDI Co., Ltd., Gyeonggi-do (KR); Robert Bosch GmbH, 70442 Stuttgart (DE)
(72) Erfinder: YAN, Xiaofeng, 71384 Weinstadt (DE); PANKIEWITZ, Christian, 70378 Stuttgart (DE); GUENON, Sylvain, 60490 Ressons sur Matz (DE); SCHMIDT, Achim, 71706 Markgroeningen (DE)
(74) Vertreter: Bee, Joachim
(86) Internationale Anmeldenummer: PCT/EP2011/050030
(87) Internationale Veröffentlichungsnummer: WO 2011/092043

(56) Entgegenhaltungen:
- WO-A1-2009/062710
- WO-A2-2007/076985
- WO-A2-2008/106946
- GB-A- 894 555
- JP-A- 2003 151 620
- US-A1- 2002 090 546
- US-A1- 2008 292 948

## Beschreibung

Die vorliegende Erfindung betrifft ein Batteriesystem mit mehreren nebeneinander angeordneten Batterien mit Temperierungseinrichtungen, wobei die Batterie ein Gehäuse aufweist und die Temperierungseinrichtung wenigstens einen Wärmetransportkörper zum Transport von Wärme aufweist, der mit dem Gehäuse der Batterie wenigstens einen thermisch leitfähigen Kontakt ausbildet, sodass über den thermisch leitfähigen Kontakt ein Wärmetransport zwischen dem Batteriegehäuse und dem Wärmetransportkörper realisierbar ist, und die Temperierungseinrichtung eine Wärmeerzeugungseinrichtung aufweist, die thermisch mit dem Wärmetransportkörper gekoppelt ist, wobei die Wärmeerzeugungseinrichtung wenigstens einen im Wärmetransportkörper eingebetteten Heizdraht umfasst, mittels dessen auf Grund seines elektrischen Widerstandes bei Einleitung von elektrischem Strom Wärme erzeugbar ist,dadurch gekennzeichnet, dass der wenigstens eine im Wärmetransportkörper eingebettete Heizdraht zwischen zwei nebeneinander angeordneten Batterien angeordnet ist und/oder dass der Wärmetransportkörper eine Bodenplatte mit einer zu den Batterien benachbarten Oberseite umfasst, wobei der wenigstens eine im Wärmetransportkörper eingebettete Heizdraht derart an der Oberseite der Bodenplatte angeordnet ist, dass sich eine durch den Kontakt der Batterien mit der Oberseite der Bodenplatte ausgebildete Aufstellfläche und der Heizdraht nicht überlappen. Außerdem betrifft die Erfindung ein Verfahren zur Erwärmung einer Batterie, bei dem wenigstens ein Wärmeeintrag von außen in das Gehäuse der Batterie erfolgt, sowie ein Kraftfahrzeug.

Batteriezellen sowie aus Batteriezellen zusammengesetzte Batterien sind weitgehend bekannt. Dabei ist unter einer Batteriezelle sowie auch unter einer aus Batteriezellen zusammengesetzten Batterie jeweils ein Akkumulator zu verstehen, der elektrisch ladbar und wieder entladbar ist. Die Batteriezelle ist dabei eine einzelne galvanische Zelle, die je nach Kombination der Materialien der Elektroden der Zelle eine charakteristische Spannung liefert. Zum Aufbau einer Batterie aus mehreren Batteriezellen werden diese elektrisch in Serie oder parallel geschaltet.

Es sind dabei insbesondere Lithium-Ionen-Batterien bekannt, die als wiederaufladbare Energiespeicher insbesondere in mobilen Geräten oder Einrichtungen Anwendung finden. Lithium-Ionen-Batterien sind insbesondere zur Elektrifizierung bzw. zur Teilelektrifizierung von elektrisch angetriebenen Fahrzeugen vorgesehen. Zur Gewährung einer ausreichenden Betriebssicherheit sowie Leistungsbereitstellung sind die Lithium-Ionen-Batterien in einem optimalen Temperaturbereich zu betreiben.

Zur Kühlung der Batterie bzw. eines Batteriesystems werden in bestimmten Ausführungsformen Kühlmedien wie z. B. Luft oder Kühlwasser bzw. Kältemittel eingesetzt, die die Batterie der Wärme aufnehmen und aufgrund der Strömung des Mediums von der Batterie wegleiten. Die Kühlmedien sind üblicherweise in Kanälen in Platten angeordnet, sodass das Kühlmedium die Platten durchströmen kann und somit bei Anordnung der Platten an der Batterie die von den Platten aufgenommene Wärme abtransportiert.

Zur Temperierung bzw. zur Kühlung einer Batterie schlägt die EP 1 278 263 A2 eine Kühlstruktur vor, bei der das Batteriegehäuse mit Metallplatten verkleidet ist. An diese Metallplatten schließen sich Wärmetransportanschlüsse an, sodass von der Batterie generierte Wärme über die Metallplatten und die Anschlüsse abgeleitet werden kann.

Lithium-Ionen-Batterien produzieren in ihrem Einsatz aufgrund des Ohmschen Widerstandes Wärme, die zur Vermeidung von Überhitzung und eines daraus gegebenenfalls entstehenden Brandes rechtzeitig abgeführt werden muss. Dies wird üblicherweise mit einer die Batterie umgebenden bzw. kontaktierenden Kühleinrichtung realisiert.

Das heißt, zur Erreichung einer optimalen Betriebstemperatur kann es insbesondere bei Lithium-Ionen-Batterien notwendig sein, das Temperaturniveau der Batterie bzw. der Umgebung der Batterie nicht nur abzusenken, sondern gegebenenfalls auch zu erhöhen. Die Batterietemperatur hat einen großen Einfluss auf die Leistungsbereitstellung sowie auf die Lebensdauer und die Betriebssicherheit.

Insbesondere bei sehr geringen Außentemperaturen kann die Batterie vor in Betriebnahme eine Temperatur aufweisen, die weit unter dem optimalen Temperaturniveau liegt. Diese Temperatur kann gegebenenfalls derart gering sein, dass es nicht möglich ist, mit der unterkühlten Lithium-Ionen-Batterie genug Energie zum Starten eines Verbrennungsmotors zur Verfügung zu stellen. Daraus ist die Notwendigkeit ersichtlich, neben einem Kühlsystem auch eine Einrichtung zur Verfügung zu stellen, mit der die Batterie auf ein ausreichendes Temperaturniveau erwärmt werden kann.

Die Druckschrift GB 894 555 A beispielsweise offenbart ein Batteriesystem mit mehreren nebeneinander angeordneten Batterien in Form "cells" (11) mit einer Temperiereinrichtung in Form eines "heating element" (28). Dabei weist jede der Batterien ein Gehäuse auf, wobei die Temperierungseinrichtung wenigstens einen Wärmetransportkörper umfasst, welcher thermisch leitfähig mit den Gehäusen der Batteriezellen verbunden ist.

Die Wärmeerzeugungseinrichtung umfasst dabei wenigstens einen im Wärmetransportkörper eingebetteten Heizdraht mittels dessen aufgrund seines elektrischen Widerstands bei Einleitung von elektrischem Strom Wärme erzugbar ist.

### Offenbarung der Erfindung

Dabei wird eine Batterie mit Temperierungseinrichtung zur Verfügung gestellt, wobei die Batterie ein Gehäuse aufweist und die Temperierungseinrichtung wenigstens einen Wärmetransportkörper zum Transport von Wärme aufweist, der mit dem Gehäuse der Batterie wenigstens einen thermisch leitfähigen Kontakt ausbildet, sodass über den thermisch leitfähigen Kontakt ein Wärmetransport zwischen dem Batteriegehäuse und dem Wärmetransportkörper realisierbar ist. Die Temperierungseinrichtung weist dabei eine Wärmeerzeugungseinrichtung auf, die thermisch mit dem Wärmetransportkörper gekoppelt ist. Dabei umfasst die Wärmeerzeugungseinrichtung wenigstens einen im Wärmetransportkörper eingebetteten Heizdraht, mittels dessen aufgrund seines elektrischen Widerstands bei Einleitung von elektrischem Strom Wärme erzeugbar ist. Erfindungsgemäß ist der wenigstens eine im Wärmetransportkörper eingebettete Heizdraht zwischen zwei nebeneinander angeordneten Batterien angeordnet und/oder umfasst der Wärmetransportkörper eine Bodenplatte mit einer zu den Batterien benachbarten Oberseite, wobei der wenigstens eine im Wärmetransportkörper eingebettete Heizdraht derart an der Oberseite der Bodenplatte angeordnet ist, dass sich eine durch den Kontakt der Batterien mit der Oberseite der Bodenplatte ausgebildete Aufstellfläche und der Heizdraht nicht überlappen.

Die Erfindung bezieht sich somit auf eine Einheit von einer Batterie und einer Temperierungseinrichtung. Die Batterie ist dabei vorzugsweise eine wiederaufladbare Batterie und insbesondere eine Lithium-Ionen-Batterie. Mit der Batterie ist dabei eine oder eine Mehrzahl von stapelweise angeordneten Batteriezellen gemeint. Der Wärmetransportkörper dient dabei nicht nur zur punktuellen bzw. linienförmigen Übertragung von Wärme, sondern auch zur Streuung der in ihm eingebrachten Wärme und somit zur flächenmäßigen Verteilung am Batteriegehäuse. Der Wärmetransportkörper kann auch, je nach Ausbildung, als Wärmeleitblech bezeichnet werden. Der Vorteil der Erfindung liegt insbesondere darin, dass von der Wärmeerzeugungseinrichtung erzeugte Wärme auf den Wärmetransportkörper übertragen wird, der die Wärme wiederum auf das Gehäuse der Batterie überträgt. Damit ist eine Batterie aktiv erwärmbar. Es erfolgt keine Einschränkung des Kühlbetriebes durch den Wärmetransportkörper. Das heißt, dass die erfindungsgemäße Einrichtung zur Temperierung in vorteilhafter Weise auch zur Kühlung eingesetzt werden kann, wobei gegenüber zur Kühlung einsetzbaren Einrichtungen nur unwesentliche konstruktive Ergänzungen erforderlich sind, um diese als Erwärmungseinrichtung im Sinne der Erfindung einsetzen zu können. Eine derart modifizierte Kühleinrichtung, die nun auch zur Übertragung von Wärme eingerichtet ist, kann auch weiterhin als Kühleinrichtung genutzt werden. Die erfindungsgemäße Temperierungseinrichtung ist somit multifunktional ausgestaltet. Mit dem erfindungsgemäßen System aus Batterie und Temperierungseinrichtung ist eine schnelle und effiziente Erwärmung der Batterie möglich. Bevorzugt ist dabei der thermisch leitfähige Kontakt zwischen dem Wärmetransportkörper und dem Batteriegehäuse ein direkter Kontakt, wobei eine möglichst großflächige Anlage des Wärmetransportkörpers am Batteriegehäuse angestrebt wird. Gemäß der Erfindung umfasst die Wärmeerzeugungseinrichtung wenigstens einen Heizdraht, mittels dessen aufgrund seines elektrischen Widerstandes bei Einleitung von elektrischem Strom Wärme erzeugbar ist. Durch diese Einrichtung ist in einfacher und kontrollierbarer Weise direkt am oder im Wärmetransportkörper Wärme erzeugbar, die über den Wärmetransportkörper an das Batteriegehäuse weiterleitbar ist. Weiters ist vorgesehen, dass die thermische Kopplung der Wärmeerzeugungseinrichtung mit dem Wärmetransportkörper unmittelbar ausgeführt ist, sodass die Wärme von der Wärmeerzeugungseinrichtung direkt an den Wärmetransportkörper übertragbar ist. Dies wird durch einen im Wärmetransportkörper eingebetteten Heizdraht realisiert. Es ist mittels des Heizdrahtes an dessen Position im Wärmetransportkörper eine Erwärmung erzeugbar, die durch Wärmeleitung innerhalb des Wärmetransportkörpers in diesem verteilt wird und somit großflächig auf das Batteriegehäuse übertragbar ist.

Zu diesem Zweck ist der Wärmetransportkörper im Wesentlichen als plattenförmiges Flächenelement ausgebildet, welches an wenigstens einer Fläche des Batteriegehäuses anliegt. Somit ist eine große Fläche des Batteriegehäuses temperierbar und demzufolge eine große Wärmemenge je Zeiteinheit zwecks Erwärmung in die Batterie übertragbar oder zum Zweck der Kühlung aus der Batterie herausleitbar.

Insbesondere bei prismatischen Batterien bzw. Batteriezellen bietet es sich an, dass der Wärmetransportkörper unter der Unterseite und/oder an einer Seitenfläche der Batterie bzw. Batteriezelle angeordnet ist. Bei der Anordnung des Wärmetransportkörpers unter der Unterseite der Batterie steht die Batterie somit auf dem Wärmetransportkörper, der auch zur Kühlung eingesetzt werden kann, indem bei der Nicht-Beheizung Batteriewärme vom Wärmetransportkörper aufgenommen wird und an die Umgebung und/oder an ein Medium abgegeben wird. In alternativer Ausführung oder ergänzend zur Positionierung an der Unterseite kann vorgesehen sein, dass der Wärmetransportkörper an einer Seitenfläche einer bevorzugt prismatisch ausgeführten Batterie anliegt. Das heißt, dass der Wärmetransportkörper als Bodenplatte genutzt werden kann, auf dem die Batterie aufgestellt wird, oder dass der Wärmetransportkörper als Seitenplatte Verwendung findet, die an eine Seitenfläche des Batteriegehäuses angelegt wird. Der Wärmetransportkörper kann sowohl in seiner Ausgestaltung als Bodenplatte oder Seitenplatte auch als Kühleinrichtung verwendet werden und in dieser Funktion auch als Kühlplatte bezeichnet werden. In den jeweiligen Platten oder Körpern können Kanäle angeordnet sein zur Durchströmung mit einem Medium wie z. B. mit einer Flüssigkeit, mittels derer zum Zweck der Erwärmung oder Kühlung Wärme an die Batterie bzw. von der Batterie übertragen wird.

In einer nicht erfindungsgemäßen Ausgestaltung der Batterie mit Temperierungseinrichtung ist vorgesehen, dass die thermische Kopplung der Wärmeerzeugungseinrichtung an den Wärmetransportkörper mittelbar ausgeführt ist, sodass Wärme von der Wärmeerzeugungseinrichtung indirekt an den Wärmetransportkörper übertragbar ist. Diese mittelbare Wärmeübertragung kann z. B. mittels eines Übertragungsmediums oder Strahlung erfolgen. Eine solche konstruktive Ausgestaltung kann z. B. hinsichtlich der Haltbarkeit und/oder der Herstellungskosten Vorteile aufweisen.

Die indirekte Wärmeübertragung kann insbesondere dadurch erreicht sein, dass der Wärmetransportkörper von einem Medium durchströmbar oder durchströmt ist und die Wärmeerzeugungseinrichtung derart angeordnet und eingerichtet ist, dass sie Wärme in das Medium eintragen kann. Die Wärme wird sodann vom Medium auf den Wärmetransportkörper übertragen und von diesem auf die Batterie übertragen. Gleichzeitig kann gegebenenfalls auch die Wärmeerzeugungseinrichtung Wärme direkt in den Transportkörper übertragen, sodass eine Kombination der direkten und indirekten Wärmeübertragung realisiert wird. Die indirekte Wärmeübertragung kann z. B. durch die Anordnung einer Wärmeerzeugungseinrichtung an einem Stutzen für den Einlass des Mediums in den Wärmetransportkörper erfolgen, sodass in den Wärmetransportkörper eingeleitetes Medium mittels der Wärmeerzeugungseinrichtung erwärmt wird und somit bereits im erwärmten Zustand im Wärmetransportkörper vorliegt und dort die Wärme an den Wärmetransportkörper abgibt. Eine derartige Einrichtung kann auch zum Kühlen der Batterie verwendet werden, wenn die Wärmeerzeugungseinrichtung außer Betrieb ist. Batteriewärme kann dann über das Batteriegehäuse an den Wärmetransportkörper abgegeben werden und vom Medium aufgenommen werden, sodass eine Ableitung des Mediums auch eine Wärmeabfuhr bewirkt.

In einer besonderen Ausgestaltung kann vorgesehen sein, dass die erfindungsgemäße Batterie mit Temperierungseinrichtung mit einer Wärmeerzeugungseinrichtung ausgestattet ist, die ein Material mit einem positiven Temperaturkoeffizienten aufweist, welches bei Einleitung von elektrischem Strom als Wärmeerzeugungseinrichtung funktioniert. Ein solches Material mit einem positiven Temperaturkoeffizienten kann insbesondere ein sogenanntes PTC-Material sein, welches z. B. als Platte unter einem als Bodenplatte ausgebildeten Wärmetransportkörper angeordnet sein kann. In alternativer Ausgestaltung kann ein solches PTC-Material auch an einem Einlassstutzen zur Einleitung eines Mediums in den Wärmetransportkörper angeordnet sein, sodass das einströmende Medium mittels des PTC-Materials beheizbar ist.

Zur Realisierung eines optimal thermisch leitfähigen Kontaktes zwischen dem Wärmetransportkörper und dem Batteriegehäuse kann zwischen diesen außerdem eine thermische Kontaktschicht angeordnet sein, wobei die thermische Kontaktschicht neben dem Ausgleich etwaiger Unebenheiten von Batteriegehäuse und/oder Wärmetransportkörper und somit zur Verbesserung des thermischen Kontaktes gegebenenfalls auch zur Befestigung des Wärmetransportkörpers am Batteriegehäuse dienen kann. Eine derartige thermische Kontaktschicht weist selbstverständlich eine hohe Wärmeleitfähigkeit auf.
Alternativ oder hinzukommend zur durch die thermische Kontaktschicht realisierten Befestigung kann außerdem eine mechanische Befestigung am Batteriegehäuse vorgesehen sein, mittels derer der Wärmetransportkörper in Bezug zum Batteriegehäuse fixiert werden kann. Eine solche mechanische Befestigung dient zur sicheren Positionierung und Fixierung des Wärmetransportkörpers in Bezug zum Batteriegehäuse und somit zur Sicherstellung eines optimalen thermischen Kontaktes über die Lebensdauer der mit der Temperierungseinrichtung ausgestatteten Batterie.

Erfindungsgemäß wird außerdem ein Batteriesystem zur Verfügung gestellt, welches eine Mehrzahl von Batterien aufweist, die gegebenenfalls jeweils nur eine Zelle aufweisen, wobei in dem Batteriesystem wenigstens eine erfindungsgemäße Batterie mit Temperierungseinrichtung angeordnet ist und ein Wärmetransportkörper wenigstens zwei Batteriegehäuse thermisch leitfähig kontaktiert. Eine Batterie kann dabei eine oder mehrere Batteriezellen aufweisen.

Diese Vielzahl von Batterien sind miteinander elektrisch in Reihe oder parallel verbunden und vorteilhafterweise in einem Stapel zu einem Batteriemodul angeordnet. Zwischen den Batterien sind Wärmetransportkörper angeordnet, sodass mit einem Wärmetransportkörper jeweils eine Seitenfläche von zwei Batterien gleichzeitig temperiert werden kann. Alternativ oder hinzukommend ist vorgesehen, dass die Vielzahl der Batterien auf einem Wärmetransportkörper stehen, der somit eine eine gemeinsame Bodenplatte ausbildet, sodass ein Wärmetransportkörper bzw. Bodenplatte jeweils die Grundflächen der Vielzahl von Batterien temperiert. Die Zuordnung der Temperierungseinrichtung ist dabei nicht auf eine bestimmte Batterie im Stapel beschränkt, sondern es sind bevorzugt alle Batterien gleichermaßen mit den Wärmetransportkörpern bzw. mit der Temperierungseinrichtung oder mehreren Temperierungseinrichtungen thermisch gekoppelt.

Die Erfindung ergänzend wird außerdem ein Verfahren zur Erwärmung einer Batterie zur Verfügung gestellt, bei dem wenigstens ein Wärmeeintrag von außen in das Gehäuse der Batterie erfolgt, wobei wenigstens eine Fläche des Batteriegehäuses zumindest bereichsweise mit einem Wärmetransportkörper thermisch leitfähig kontaktiert wird und der Wärmetransportkörper mittels einer Wärmeerzeugungseinrichtung erwärmt wird, sodass die Wärme vom Wärmetransportkörper auf das Batteriegehäuse übertragen wird. Zur Durchführung dieses Verfahrens lässt sich insbesondere die erfindungsgemäße Batterie mit Temperierungseinrichtung einsetzen. Es lässt sich somit in einfacher und störunanfälliger Weise die Batterie auf ein optimales Temperaturniveau erwärmen. Die Einrichtung zur Durchführung des Verfahrens kann dabei auch zur Kühlung der Batterie bzw. der Vielzahl von Batterien eingesetzt werden, wenn die Wärmeerzeugungseinrichtung außer Betrieb ist.

Es bietet sich an, dass bei Betrieb der Wärmeerzeugungseinrichtung mit elektrischer Energie diese elektrische Energie von der Batterie zur Verfügung gestellt wird, die zu temperieren ist.

Außerdem wird erfindungsgemäß ein Kraftfahrzeug, insbesondere ein Elektrofahrzeug oder ein Hybridfahrzeug zur Verfügung gestellt, welches mindestens eine erfindungsgemäße Batterie und/oder mindestens ein erfindungsgemäßes Batteriesystem umfasst.

### Zeichnungen

Ausführungsbeispiele der Erfindung werden anhand der Zeichnungen und in nachfolgenden Beschreibungen näher erläutert. Es zeigen:
Figur 1 ein Batteriesystem mit zwischen den Batterien angeordneten Wärmetransportkörpern in Ansicht von vorn,
Figur 2 eine Batterie mit einer an einer Seitenfläche angeordneten Seitenplatte in Ansicht von der Seite,
Figur 3 ein als Seitenplatte ausgestalteter Wärmetransportkörper in einer ersten Ausgestaltung,
Figur 4 ein als Seitenplatte ausgestalteter Wärmetransportkörper in einer zweiten Ausgestaltung,
Figur 5 ein Batteriesystem mit als Bodenplatte ausgestaltetem Wärmetransportkörper,
Figur 6 einen als Bodenplatte ausgestaltetenr Wärmetransportkörper in einer ersten Ausgestaltung,
Figur 7 einen als Bodenplatte ausgestalteten Wärmetransportkörper in einer zweiten Ausgestaltung,
Figur 8 ein Batteriesystem mit Bodenplatte sowie unter der Bodenplatte angeordnetem PTC-Material,
Figur 9 ein Batteriesystem mit Bodenplatte und indirekter Wärmeübertragung in Ansicht von vorn,
Figur 10 ein Batteriesystem mit Bodenplatte und indirekter Wärmeübertragung in Ansicht von der Seite,
Figur 11 eine Batterie mit einem Wärmetransportkörper an einer Seitenfläche sowie mit Bodenplatte zur indirekten Wärmeübertragung,
Figur 12 ein Batteriesystem mit einer Vielzahl von Batterien und dazwischen angeordneten Wärmetransportkörpern und mit einer Bodenplatte in perspektivischer Ansicht.

### Ausführungsformen der Erfindung

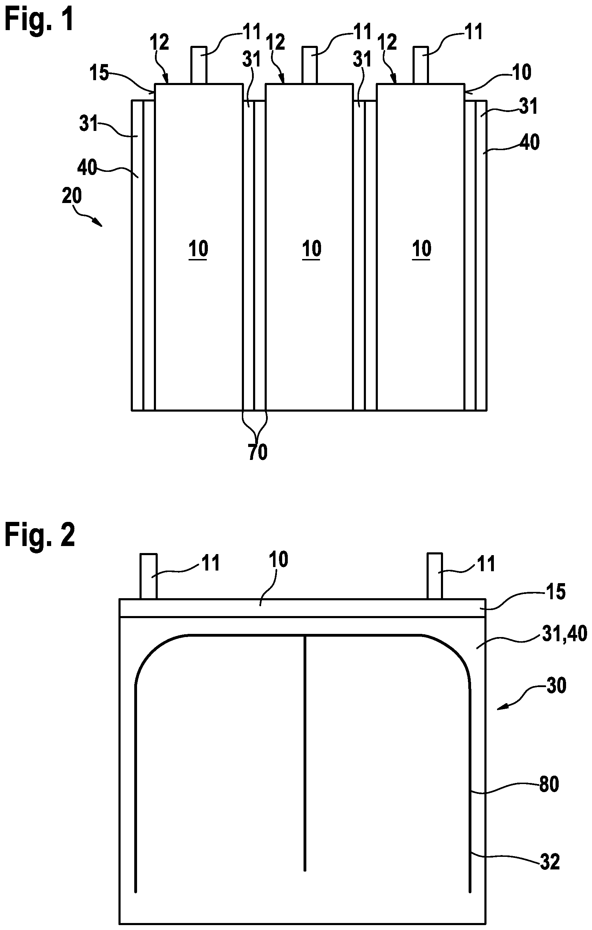

In Figur 1 ist ein Batteriesystem 20 gezeigt, in dem einzelne Batterien 10 zu einem Stapel nebeneinander angeordnet sind. Aus den Oberseiten der Batterien ragen die Terminals 11 heraus. An den Seitenflächen 15 der Batterien 10 sind Wärmetransportkörper 31 in Form von Seitenplatten 40 angeordnet. Es ist ersichtlich, dass bis auf die äußeren Seitenplatten 40 ein jeder zwischen zwei Batterien 10 angeordneter Wärmetransportkörper 31 wenigstens eine Batterie 10 bzw. deren Gehäuse 12 kontaktiert. Zwischen den Batteriegehäusen 12 und den Wärmetransportkörpern 31 bzw. Seitenplatten 40 besteht ein thermisch leitfähiger Kontakt 70. Somit lässt sich Wärme, die in den Wärmetransportkörper 31 eingetragen ist, über den thermisch leitfähigen Kontakt 70 an das Batteriegehäuse 12 übertragen.

In Figur 2 ist in Ansicht von der Seite ein solcher Wärmetransportkörper 31, der als Seitenplatte 40 ausgestaltet ist, an einer Seitenfläche 15 der Batterie 10 dargestellt. Der Wärmetransportkörper 31 bzw. die Seitenplatte 40 ist dabei ein Bestandteil der Temperierungseinrichtung 30. Der Wärmetransportkörper 31 ist derart ausgestaltet, dass er mit einem Heizdraht 80 versehen ist, der somit gleichzeitig die Wärmeerzeugungseinrichtung 32 darstellt. Bei Einleitung von elektrischem Strom in den Heizdraht 80 erwärmt sich dieser und überträgt die Wärme an den Wärmetransportkörper, der wiederum die Wärme an das Batteriegehäuse 12 überträgt.

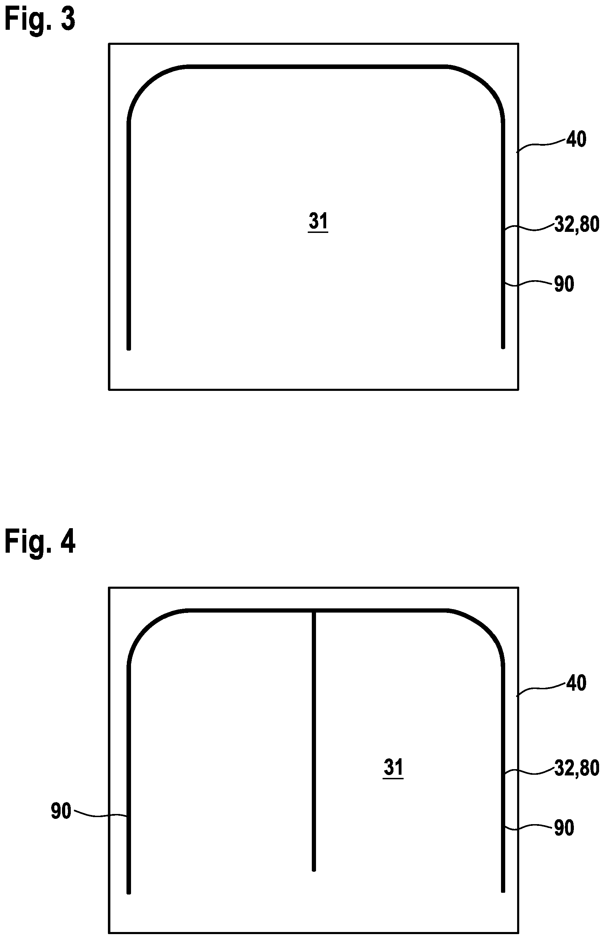

In den Figuren 3 und 4 sind unterschiedliche Ausführungsformen von Seitenplatten 40 dargestellt. Beiden gemeinsam ist, dass an oder auf ihnen ein Heizdraht 80 angeordnet ist. In bevorzugter Ausführungsform ist der Heizdraht 80 in einer Nut 90 in der Seitenplatte 40 aufgenommen. Die Nut hat dabei vorteilhafterweise eine komplementäre Form zu der des Heizdrahtes. Bevorzugt ist der Nut- und Heizdrahtverlauf wie in Figur 3 dargestellt ausgebildet. Die Nut verläuft dabei am oberen Rand der Seitenplatte 40 und erstreckt sich in U-Form an den Seitenrändern nach unten. Dies hat den Vorteil, dass der Wärmeleitpfad von oben nach unten nicht unterbrochen wird.

Bei höheren Anforderungen an die Heizleistung und Wärmeverteilung kann wie in Figur 4 dargestellt noch ein zusätzlicher Strang vom Heizdraht 80 und Nut 90 mittig senkrecht an bzw. in der Seitenplatte 40 verlaufen. Durch Wärmeleitung der vom Heizdraht 80 erzeugten Wärme lässt sich die Seitenplatte 40 großflächig erwärmen und somit großflächig und effizient Wärme in das Batteriegehäuse 12 übertragen. Dadurch, dass nur geringe Flächenbereiche von dem die Wärmeerzeugungseinrichtung 32 darstellenden Heizdraht 80 eingenommen sind, lässt sich die erfindungsgemäße Einrichtung dennoch zur Kühlung der Batterie im ausgeschalteten Zustand der Wärmeerzeugungseinrichtung 32 verwenden, da großflächige Bereiche der Seitenplatte 40 zur Wärmeabfuhr aus der Batterie genutzt werden können.

Durch die Anordnung von Seitenplatten 40 zwischen den einzelnen Batterien 10 und der Bestückung der Seitenplatten 40 mit den Heizdrähten 80 lässt sich über eine geeignete Steuerung an unterschiedlichen Stellen zwischen den einzelnen Batterien 10 unterschiedlich viel Wärme zum selben Zeitpunkt erzeugen.

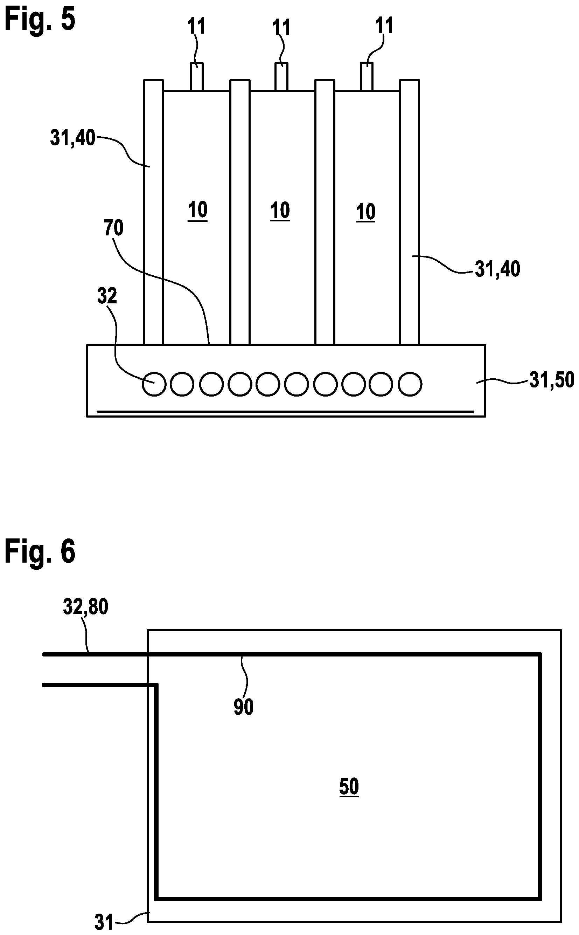

Erfindungsgemäß ist dabei die Wärmeerzeugungseinrichtung 32 nicht auf die Form als Seitenplatte 40 eingeschränkt, sondern sie kann auch, wie in Figur 5 dargestellt, als Bodenplatte 50 realisiert sein.

Ähnlich wie bei der beschriebenen Seitenplatte 40 können in der Bodenplatte 50 Heizdrähte 80, gegebenenfalls wieder in Nuten 90, angeordnet sein. Bei Anordnung auf der Oberseite der Bodenplatte 50 ist es vorteilhaft, wenn der Heizdraht 80 wie in Figur 6 dargestellt verläuft, sodass die Aufstellfläche der Batterien 10 auf der Bodenplatte 50 sich nicht mit dem Heizdraht 80 überlappt. Dadurch wird der Wärmeleitpfad von Seitenplatten 40, die ebenfalls auf der Bodenplatte 50 aufgestellt sind, zur Bodenplatte 50 bzw. der Wärmeleitpfad zwischen der Batterie 10 und der Bodenplatte 50 nicht gestört.

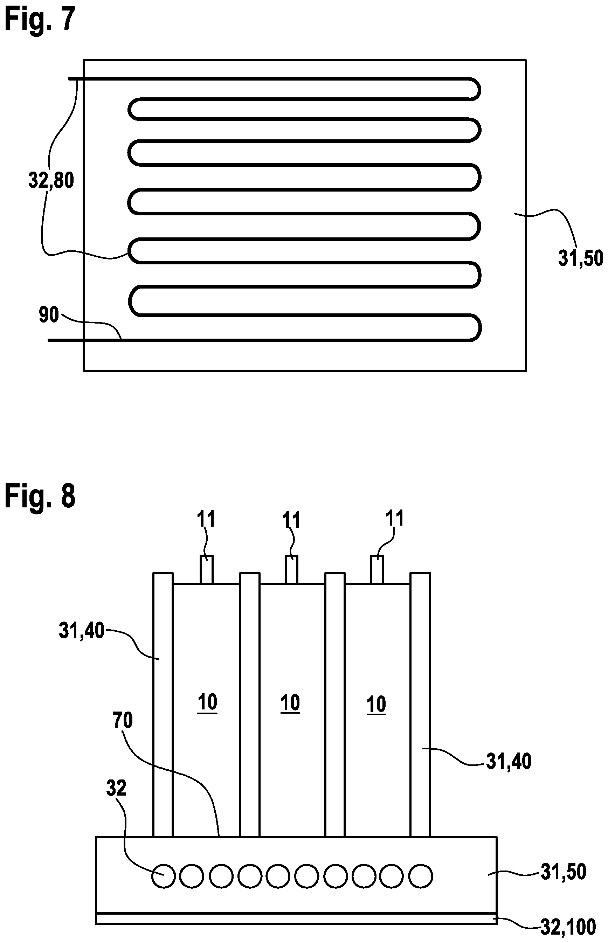

Bei Anordnung des Heizdrahtes 80 als Wärmeerzeugungseinrichtung 32 an der Unterseite der Bodenplatte 50 kann dieser, wie in Figur 7 gezeigt, mäanderförmig verlaufen, sodass der Heizdraht 80 eine größere Fläche der Bodenplatte bedeckt, wodurch die einbringbare Heizleistung gesteigert werden kann.

Die Erfindung kann dabei derart ausgestaltet sein, dass neben der Anordnung von Heizdraht 80 an der Bodenplatte ebenfalls die Seitenplatten 40 mit Heizdraht in beschriebener Art und Weise versehen sind.

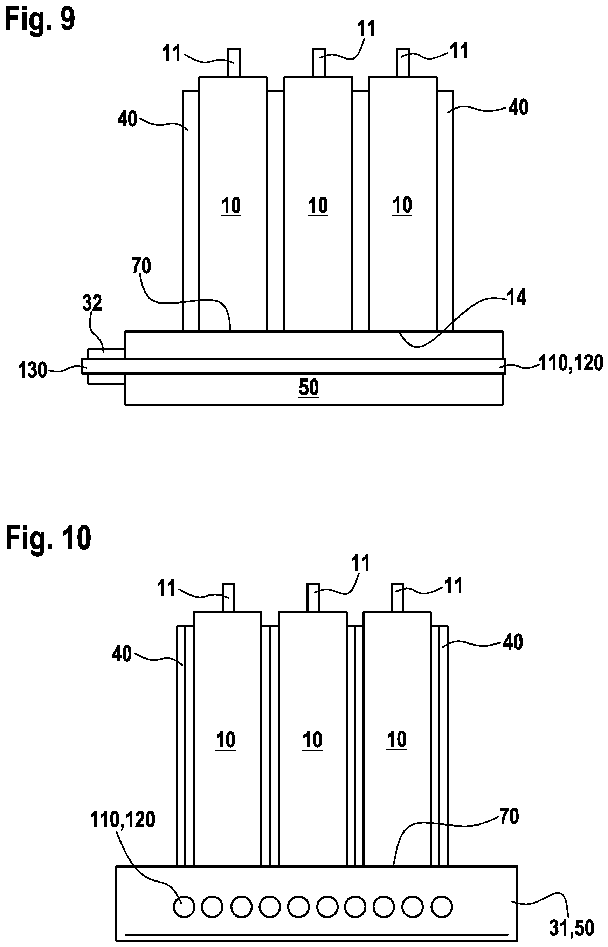

Hinzukommend oder alternativ kann die Bodenplatte 50 mittels eines sogenannten PTC-Materials 100 erwärmt werden, dessen Anordnung in Figur 8 angedeutet ist. Dies erfolgt ebenfalls durch Einleitung von elektrischem Strom in das PTC-Material 100. Hinzukommend kann vorgesehen sein, dass im Gegensatz zu der bisher beschriebenen direkten Wärmeübertragung von der Wärmeerzeugungseinrichtung 32 an den Wärmetransportkörper 31 eine indirekte Wärmeübertragung zwischen Wärmeerzeugungseinrichtung 32 und Wärmetransportkörper 31 realisiert wird. Dies kann z. B. gemäß Figur 9 erfolgen, in der dargestellt ist, dass an einem Einlassstutzen 130 zum Einführen von einem Medium 120 in eine Bodenplatte 50 die Wärmeerzeugungseinrichtung 32 angeschlossen ist.

Die Wärmeerzeugungseinrichtung kann dabei der beschriebene Heizdraht 80 oder auch ein PTC-Material 100 sein. Bei Erwärmung der Wärmeerzeugungseinrichtung 32 überträgt diese Wärme in den Einlassstutzen 130 und somit auch in das durch den Einlassstutzen 130 fließende Medium 120, sodass das Medium 120 in der Bodenplatte 50 eine relativ hohe Temperatur aufweist und Wärme an die Bodenplatte 50 überträgt, die wiederum die Wärme in die Unterseiten 14 der Batterien 10 weiterleitet. Der Wärmetransportkörper 31 ist dabei wiederum die Bodenplatte 50, wobei die Übertragung der von der Wärmeerzeugungseinrichtung 32 erzeugten Wärme an die Bodenplatte 50 mittels des Mediums 120 erfolgt. Dieses Medium kann insbesondere eine Flüssigkeit, wie z. B. Kühlflüssigkeit sein. Dabei ist die Erfindung nicht auf die Einleitung von Medium in die Bodenplatte 50 beschränkt, sondern es kann stattdessen oder zusätzlich vorgesehen sein, dass das Medium auch durch Kanäle in den Seitenplatten 40 zur Erwärmung dieser als Wärmetransportkörper 31 fungierenden Seitenplatten 40 strömt.

In Figur 10 ist das Batteriesystem 20 gemäß Figur 9 dargestellt, wobei jedoch zur Vereinfachung der Darstellung lediglich die Bodenplatte 50 um 90° gedreht gezeigt ist. Es ist in der Bodenplatte 50 durch die gezeigten Kreise der parallele Verlauf von Kanälen 110 durch die Bodenplatte angedeutet, durch die das Medium strömen kann. Dabei ist in bevorzugter Weise ein mäanderförmiger Verlauf der Kanäle 110 vorgesehen.

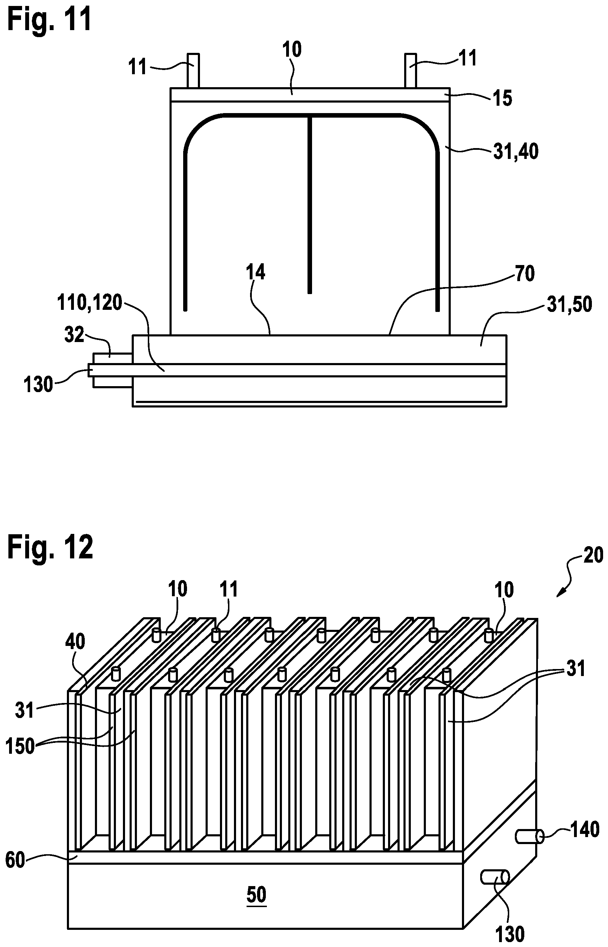

In Figur 11 ist dargestellt, wie unterschiedliche Wärmetransportkörper 31 in einer erfindungsgemäßen Einrichtung kombiniert sein können, nämlich indem die Bodenplatte 50 mit den vom Medium 120 durchströmbaren Kanälen versehen ist und an wenigstens einem Einlassstutzen 130 eine Wärmeerzeugungseinrichtung 32 angeordnet ist. An den Seitenflächen 15 der Batterie 10 sind ebenfalls als Wärmetransportkörper 31 funktionierende Seitenplatten 40 angeordnet. Dadurch lässt sich die Batterie durch ihre Unterseite 14 sowie durch ihre Seitenflächen 15 erwärmen.

Wenn die jeweiligen Wärmeerzeugungseinrichtungen 32 außer Betrieb sind, kann dieselbe Einrichtung auch zur Kühlung der Batterie 10 verwendet werden, indem über die Seitenflächen 15 der Batterie 10 Wärme an die Seitenplatte 40 abgegeben wird und diese die Wärme in die Bodenplatte 50 einträgt und dort die Wärme über das strömende Medium 120 abgeleitet wird. Außerdem wird die Wärme über die Unterseite 14 der Batterie an die Bodenplatte 50 übertragen, wo sie in beschriebener Weise durch das Medium 120 abgeleitet wird.

In Figur 12 ist ein Batteriesystem 20 mit einer Vielzahl von Batterien 10 dargestellt, wobei ersichtlich ist, dass zwischen den einzelnen Batterien 10 jeweils als Wärmetransportkörper 31 ausgestaltete Seitenplatten 40 angeordnet sind. Dabei ist zwischen einer Seitenplatte 40 und einer Batterie 10 zusätzlich eine thermische Kontaktschicht 150 angeordnet, die der besseren thermischen Kontaktierung des Wärmetransportkörpers 31 mit der Batterie 10 und/oder der mechanischen Befestigung der beiden Bauteile aneinander dient. Zudem können weitere mechanische Befestigungsmittel, die in den Figuren nicht dargestellt sind, zur Befestigung der Bauteile aneinander dienen, um die gewünschte Lebensdauer zu gewährleisten und den optimalen thermischen Kontakt sicherzustellen. Aus Figur 12 ist zudem ersichtlich, dass an der Bodenplatte 50 neben dem Einlassstutzen 130, der gegebenenfalls mit einer Wärmeerzeugungseinrichtung 32 versehen sein kann, parallel ein Auslassstutzen 140 zum Herauslassen des erwärmten oder gekühlten Mediums 120 angeordnet ist.

Die Wärmetransportkörper 31 in Form von Seitenplatten 40 sind bevorzugt mit der Bodenplatte 50 thermisch leitfähig verbunden.

## Patentansprüche

1. Batteriesystem (20) mit mehreren nebeneinander angeordneten Batterien (10) mit Temperierungseinrichtungen (30), wobei jede Batterie (10) ein Gehäuse (12) aufweist und die Temperierungseinrichtung (30) wenigstens einen Wärmetransportkörper (31) zum Transport von Wärme aufweist, der mit dem Gehäuse (12) der Batterie (10) wenigstens einen thermisch leitfähigen Kontakt (70) ausbildet, sodass
über den thermisch leitfähigen Kontakt (70) ein Wärmetransport zwischen dem Batteriegehäuse (12) und dem Wärmetransportkörper (31) realisierbar ist, und die Temperierungseinrichtung (30) eine Wärmeerzeugungseinrichtung (32) aufweist, die thermisch mit dem Wärmetransportkörper (31) gekoppelt ist, wobei die Wärmeerzeugungseinrichtung (32) wenigstens einen im Wärmetransportkörper (31) eingebetteten Heizdraht (80) umfasst, mittels dessen auf Grund seines elektrischen Widerstandes bei Einleitung von elektrischem Strom Wärme erzeugbar ist, **dadurch gekennzeichnet, dass** der wenigstens eine im Wärmetransportkörper (31) eingebettete Heizdraht (80) zwischen zwei nebeneinander angeordneten Batterien (10) angeordnet ist und/oder dass
der Wärmetransportkörper (31) eine Bodenplatte (50) mit einer zu den Batterien (10) benachbarten Oberseite umfasst, wobei
der wenigstens eine im Wärmetransportkörper (31) eingebettete Heizdraht (80) derart an der Oberseite der Bodenplatte (50) angeordnet ist, dass sich eine durch den Kontakt der Batterien (10) mit der Oberseite der Bodenplatte (50) ausgebildete Aufstellfläche und der Heizdraht (80) nicht überlappen.

2. Batteriesystem (20) nach Anspruch 1, wobei die thermische Kopplung der Wärmeerzeugungseinrichtung (32) an den Wärmetransportkörper (31) unmittelbar ausgeführt ist, sodass Wärme von der Wärmeerzeugungseinrichtung (32) direkt an den Wärmetransportkörper (31) übertragbar ist.

3. Batteriesystem (20) nach wenigstens einem der vorhergehenden Ansprüche, wobei der Wärmetransportkörper (31) im Wesentlichen als plattenförmiges Flächenelement ausgebildet ist und an wenigstens einer Fläche (13) des Batteriegehäuses (12) anliegt, bevorzugt unter der Unterseite (14) und/oder an einer Seitenfläche (15) der Batterie (10) angeordnet ist.

4. Batteriesystem (20) nach wenigstens einem der vorhergehenden Ansprüche,
**dadurch gekennzeichnet, dass**
das Batteriesystem (20) eine Steuerung aufweist, welche dazu ausgebildet ist, an unterschiedlichen Stellen zwischen den einzelnen Batterien (10) unterschiedlich viel Wärme zum selben Zeitpunkt zu erzeugen.

5. Batteriesystem (20) nach wenigstens einem der vorhergehenden Ansprüche, wobei die Wärmeerzeugungseinrichtung (32) ein Material mit einem positiven Temperaturkoeffizienten (100) aufweist, mittels dessen bei Einleitung von elektrischem Strom Wärme produzierbar ist.

6. Batteriesystem (20) nach einem der vorhergehenden Ansprüche, **dadurch gekennzeichnet, dass** ein Wärmetransportkörper (31) wenigstens zwei Gehäuse (12) thermisch leitfähig kontaktiert.

7. Verfahren zur Erwärmung eines Batteriesystems (20) nach wenigstens einem der Ansprüche 1 bis 6, bei dem wenigstens ein Wärmeeintrag von außen in das Gehäuse (12) der Batterie (10) erfolgt, wobei wenigstens eine Fläche (13) des Batteriegehäuses (12) zumindest bereichsweise mit einem Wärmetransportkörper (31) thermisch leitfähig kontaktiert wird und der Wärmetransportkörper (31) mittels einer Wärmeerzeugungseinrichtung (32) durch einen im Wärmetransportkörper (31) eingebetteten Heizdraht erwärmt wird, mittels dessen auf Grund seines elektrischen Widerstandes bei Einleitung von elektrischem Strom Wärme erzeugt wird, sodass die Wärme vom Wärmetransportkörper (31) auf das Batteriegehäuse (12) übertragen wird.

8. Kraftfahrzeug, umfassend mindestens ein Batteriesystem nach einem der Ansprüche 1-6.

## Claims

1. Battery system (20) comprising a plurality of batteries (10) which are arranged next to one another and have temperature-control devices (30), wherein each battery (10) has a housing (12) and the temperature-control device (30) has at least one heat-transporting body (31) for transporting heat, which heat-transporting body forms at least one thermally conductive contact (70) with the housing (12) of the battery (10), so that transportation of heat between the battery housing (12) and the heat-transporting body (31) can be implemented by means of the thermally conductive contact (70), and the temperature-control device (30) has a heat-generating device (32) which is thermally coupled to the heat-transporting body (31), wherein the heat-generating device (32) comprises at least one heating wire (80) which is embedded in the heat-transporting body (31) and by means of which heat can be generated on account of its electrical resistance when electric current is introduced, **characterized in that** the at least one heating wire (80) which is embedded in the heat-transporting body (31) is arranged between two batteries (10) which are arranged next to one another, and/or **in that** the heat-transporting body (31) comprises a base plate (50) with a top side which is adjacent to the batteries (10), wherein the at least one heating wire (80) which is embedded in the heat-transporting body (31) is arranged on the top side of the base plate (50) in such a way that a placement surface, which is formed by the contact of the batteries (10) with the top side of the base plate (50), and the heating wire (80) do not overlap.

2. Battery system (20) according to Claim 1, wherein the heat-generating device (32) is directly thermally coupled to the heat-transporting body (31), so that heat can be directly transmitted from the heat-generating device (32) to the heat-transporting body (31).

3. Battery system (20) according to at least one of the preceding claims, wherein the heat-transporting body (31) is substantially in the form of a plate-like flat element and bears against at least one surface (13) of the battery housing (12), preferably is arranged beneath the bottom side (14) and/or on a side surface (15) of the battery (10).

4. Battery system (20) according to at least one of the preceding claims, **characterized in that** the battery system (20) has a control means which is designed to generate different levels of heat at different points between the individual batteries (10) at the same time.

5. Battery system (20) according to at least one of the preceding claims, wherein the heat-generating device (32) comprises a material with a positive temperature coefficient (100), by means of which material heat can be produced when electric current is introduced.

6. Battery system (20) according to one of the preceding claims, **characterized in that** a heat-transporting body (31) thermally conductively contact-connects at least two housings (12).

7. Method for heating a battery system (20) according to at least one of Claims 1 to 6, in which method heat is introduced at least once from the outside into the housing (12) of the battery (10), wherein a heat-transporting body (31) makes thermally conductive contact with at least one surface (13) of the battery housing (12) at least in regions, and the heat-transporting body (31) is heated by means of a heat-generating device (32) by way of a heating wire which is embedded in the heat-transporting body (31) and by means of which heat is generated on account of its electrical resistance when electric current is introduced, so that the heat is transmitted from the heat-transporting body (31) to the battery housing (12).

8. Motor vehicle comprising at least one battery system according to one of Claims 1-6.

## Revendications

1. Système de batteries (20) comprenant plusieurs batteries (10) munies de dispositifs d'équilibrage de température (30) disposées côte à côte,
chaque batterie (10) possédant un boîtier (12) et le dispositif d'équilibrage de température (30) possédant au moins un corps de transport de chaleur (31) destiné au transport de chaleur et qui forme au moins un contact thermiquement conducteur (70) avec le boîtier (12) de la batterie (10), de sorte que
un transport de chaleur entre le boîtier de batterie (12) et le corps de transport de chaleur (31) peut être réalisé par le biais du contact thermiquement conducteur (70), et le dispositif d'équilibrage de température (30) possède un dispositif de production de chaleur (32) qui est couplé thermiquement avec le corps de transport de chaleur (31), le dispositif de production de chaleur (32) comportant au moins un fil chauffant (80) enrobé dans le corps de transport de chaleur (31) au moyen duquel de la chaleur peut être produite en y faisant passer un courant électrique du fait de sa résistance électrique, **caractérisé en ce que** l'au moins un fil chauffant (80) enrobé dans le corps de transport de chaleur (31) est disposé entre deux batteries (10) disposées côte à côté et/ou **en ce que**
le corps de transport de chaleur (31) comporte une plaque de fond (50) ayant un côté supérieur voisin des batteries (10),
l'au moins un fil chauffant (80) enrobé dans le corps de transport de chaleur (31) étant disposé sur le côté supérieur de la plaque de fond (50) de telle sorte qu'une surface de montage, formée par le contact des batteries (10) avec le côté supérieur de la plaque de fond (50), et le fil chauffant (80) ne se chevauchent pas.

2. Système de batteries (20) selon la revendication 1, le couplage thermique du dispositif de production de chaleur (32) au corps de transport de chaleur (31) étant réalisé directement, de sorte que la chaleur puisse être transmise directement du dispositif de production de chaleur (32) au corps de transport de chaleur (31).

3. Système de batteries (20) selon au moins l'une des revendications précédentes, le corps de transport de chaleur (31) étant sensiblement réalisé sous la forme d'un élément plat en forme de plaque et repose contre au moins une surface (13) du boîtier de batterie (12), de préférence sous le côté inférieur (14) et/ou est disposé contre une surface latérale (15) de la batterie 10).

4. Système de batteries (20) selon au moins l'une des revendications précédentes, **caractérisé en ce que** le système de batteries (20) possède une commande qui est configurée pour produire des niveaux de chaleur différents au même instant entre les batteries individuelles (10).

5. Système de batteries (20) selon au moins l'une des revendications précédentes, le dispositif de production de chaleur (32) possédant un matériau ayant un coefficient de température positif (100) au moyen duquel de la chaleur peut être produire en y faisant passer un courant électrique.

6. Système de batteries (20) selon l'une des revendications précédentes, **caractérisé en ce que** le corps de transport de chaleur (31) est mis en contact thermiquement conducteur avec au moins deux boîtiers (12).

7. Procédé pour faire chauffer un système de batteries (20) selon au moins l'une des revendications 1 à 6, avec lequel au moins un apport de chaleur dans le boîtier (12) de la batterie (10) est effectué depuis l'extérieur, au moins une surface (13) du boîtier de batterie (12) étant mise en contact thermiquement conducteur au moins dans certaines zones avec un corps de transport de chaleur (31) et le corps de transport de chaleur (31) étant chauffé au moyen d'un dispositif de production de chaleur (32) par un fil chauffant (80) enrobé dans le corps de transport de chaleur (31) au moyen duquel de la chaleur est produite en y faisant passer un courant électrique du fait de sa résistance électrique, de sorte que la chaleur est transmise du corps de transport de chaleur (31) au boîtier de batterie (12).

8. Véhicule automobile comprenant au moins un système de batteries selon l'une des revendications 1 à 6.
